# EUROPÄISCHE PATENTSCHRIFT

(11) **EP 4 239 436 B1**
(45) Veröffentlichungstag und Bekanntmachung des Hinweises auf die Patenterteilung: **03.07.2024**
(21) Anmeldenummer: 22159898.0
(22) Anmeldetag: 03.03.2022
(51) Int. Cl.: G05D 19/02, F03D 7/02, F16F 15/00, H02K 5/24

(54) **VERFAHREN ZUR SCHWINGUNGSDÄMPFUNG EINER TRIEBSTRANGANORDNUNG**
METHOD FOR DAMPENING THE VIBRATION OF A DRIVETRAIN ASSEMBLY
PROCÉDÉ D'AMORTISSEMENT DES VIBRATIONS D'UN AGENCEMENT DE CHAÎNE CINÉMATIQUE

(43) Veröffentlichungstag der Anmeldung: 06.09.2023
(73) Patentinhaber: Wölfel Engineering GmbH & Co. KG., 97204 Höchberg (DE)
(72) Erfinder: ECKSTEIN, Manuel, 97204 Höchberg (DE); ENGELHARDT, Jürgen, 97204 Höchberg (DE); ZECH, Philipp, 97204 Höchberg (DE)
(74) Vertreter: Keil & Schaafhausen Patentanwälte PartGmbB

(56) Entgegenhaltungen:
- EP-A1- 2 479 427
- DE-A1-102011 052 938
- US-A1- 2018 017 042

## Beschreibung

Die vorliegende Erfindung betrifft ein Verfahren zur Schwingungsdämpfung einer Triebstranganordnung mit wenigstens einer aktiven Schwingungsdämpferanordnung und wenigstens einer Schwingungsaufnahmeanordnung.

Weiterhin betrifft die vorliegende Erfindung eine Vorrichtung zur Schwingungsdämpfung von Triebstranganordnung mit wenigstens einer aktiven Schwingungsdämpfungsanordnung, wenigstens einer Schwingungsaufnahmeanordnung und einer Verarbeitungseinheit.

Unter einer Triebstranganordnung ist in der folgenden Beschreibung beispielsweise eine stationäre Triebstranganordnung zu verstehen, wie sie beispielsweise in Windenergieanlagen oder dergleichen verwendet wird findet. Schwingungen solcher Triebstranganordnung werden über Strukturkomponenten beispielsweise der Windenergieanlagen nach außen getragen und können als Töne, sogenannte Tonhaltigkeiten, von außen wahrnehmbar sein. Die hörbaren Töne sind beispielsweise Brummen oder Pfeifen und treten als Einzeltöne aus dem Grund-Geräusch der Windenergieanlage hervor. Solche Tonhaltigkeiten erhöhen eine mögliche Störwirkung eines Geräusches im Allgemeinen erheblich.

EP 2 479 427 A1 beschreibt ein Verfahren zur Schwingungsdämpfung eines Triebstrangs in einer Windturbine unter der Verwendung einer Bremsvorrichtung. Dabei werden Parameterwerte ermittelt, die eine Schwingung des Triebstrangs repräsentieren. Basierend auf den ermittelten Parameterwerten werden unter Verwendung einer Bremsvorrichtung Dämpfungskräfte auf einen Triebstrang ausgeübt, die gegen die Schwingungen des Triebstrangs wirken. Dabei werden aus Parameterwerten wie Drehzahlen, Drehmomenten, Stellung und Rundlauf der Bremsscheibe Soll-Werte in Abhängigkeit eines aktuellen Dämpfungssteuerbefehls ermittelt. Dabei kann aus den Parameterwerten eine Kurve von zu dämpfenden Schwingmomenten ermittelt werden, sodass Dämpfungskräfte ausgeübt werden können, die gegengleich der ermittelten Kurve ausgeübt werden.

US 2018/017042 A1 beschreibt ein Kontrollsystem, um strukturelle Vibrationen einer Windturbine mit mehreren Rotorblättern zu dämpfen. Das System weist eine Anordnung auf, die Vibrationen der Struktur aufnimmt und dazu konfiguriert ist, Dämpfungsbefehle zu ermitteln. Dabei weist jede der Windturbinen einen Dämpfungskontrolleur auf, der die Dämpfbefehle empfängt und die Dämpfbefehle an eine Verstelleinrichtung der Turbinenblätter übergibt. Dadurch werden Vibrationen der Struktur entgegengewirkt.

Die Aufgabe der vorliegenden Erfindung ist es daher, ein Verfahren vorzuschlagen, welches die Geräuschemissionen einer Triebstranganordnung reduziert.

Die Aufgabe wird durch die Merkmale des Anspruchs 1 gelöst.

Die Schwingungsaufnahmeanordnung erfasst Schwingungen der Triebstranganordnung und übergibt die erfassten Schwingungen in Form von Messsignalen an die Verarbeitungseinheit. Die Verarbeitungseinheit überführt die Messsignale in virtuelle Freiheitsgrade. Der Freiheitsgrad bezeichnet im engen, mechanischen Sinne jede voneinander unabhängige Bewegungsmöglichkeit oder eine beliebige Kombination jeder Bewegungsmöglichkeit. Es liegen sechs verschiedene Freiheitsgrade vor, wie beispielsweise Rollen um die Hauptachse des Triebstranges, Nicken um die Querrichtung, Gieren um die Hochachse, eine x-translatorische Bewegung, eine y-translatorische Bewegung und eine z-translatorische Bewegung. Durch diese Freiheitsgrade können die Starrkörper-Schwingungen oder weitere elastische Schwingformen der Triebstranganordnung dargestellt werden. Sollten Schwingungen nur in einzelnen Freiheitsgraden vorliegen, so können nur die einzelnen betreffenden Freiheitsgrade betrachtet werden. Bei der Überführung der Messsignale in virtuelle Freiheitsgrade wird auch von einer Transformation gesprochen. Die Ermittlung eines virtuellen Freiheitsgrades kann auf verschiedenen Messsignalen von verschiedenen Schwingungsaufnahmeanordnungen basieren.

Basierend auf den berechneten virtuellen Freiheitsgraden wird wenigstens ein Stellsignal ermittelt. Um wenigstens ein Stellsignal zu erhalten, wird eine Rücktransformation ausgehend von den virtuellen Freiheitsgraden vorgenommen. Dieses Stellsignal wird an wenigstens eine Schwingungsdämpferanordnung ausgegeben bzw. übermittelt. Die Schwingungsdämpferanordnung dämpft basierend auf dem wenigstens einen Stellsignal die Triebstranganordnung.

Durch die Überführung der Messsignale in virtuelle Freiheitsgrade können Schwingungen der Triebstranganordnung gezielt ausgewertet werden. Dies erlaubt eine gezielte Dämpfung der Schwingungen basierend auf unterschiedlichen Messsignalen von verschiedenen Schwingungsaufnahmeanordnungen.

Vorzugsweise verwendet der Schritt b) wenigstens einen Bandpassfilter. Der Bandpassfilter erlaubt es, dass nur Signale eines bestimmten Frequenzbandes passieren können. Frequenzbereiche oberhalb und unterhalb dieses Durchlassbereiches werden gesperrt bzw. deutlich abgeschwächt. Dies stellt ein einfaches Mittel dar, Messsignale zu filtern und entsprechenden virtuellen Freiheitsgraden und/oder Frequenzbereich zuzuordnen. Pro Messsignals können mehrere unterschiedliche Bandpassfilter zum Einsatz kommen, so dass basierend auf einem Messsignal mehrere unterschiedliche Frequenzbereiche herausgearbeitet werden können, die wiederum verschiedenen virtuellen Freiheitsgraden zugeordnet werden. Dadurch können basierend auf einem Messsignal verschiedene Frequenzbereiche betrachtet werden.

Vorzugsweise werden in Schritt c) Drehzahlmesssignale wenigstens eines Drehzahlsensors der Triebstranganordnung mit einbezogen. Durch die Einbeziehung von Drehzahlmesssignalen können drehzahlabhängige Schwingungen der Triebstranganordnung gezielt bedämpft werden.

Vorzugsweise werden die Messsignale in wenigstens einem ersten Koordinatensystem bereitgestellt, wobei die virtuellen Freiheitsgrade wenigstens in einem zweiten Koordinatensystem dargestellt werden. So können die Messsignale beispielsweise in einem kartesischen Koordinatensystem dargestellt werden, wobei die Messsignale im Rahmen der virtuellen Freiheitsgrade beispielsweise in einem Polarkoordinatensystem dargestellt werden. Dies erlaubt eine einfache Betrachtung der virtuellen Freiheitsgrade, so dass ausgehend von den virtuellen Freiheitsgraden das wenigstens eine Stellsignal einfach ermittelt werden kann.

Die virtuellen Freiheitsgrade bilden Schwingungskomponenten ab, die für wenigstens eine Tonhaltigkeit maßgeblich sind. Wie bereits oben beschrieben, liegt eine Tonhaltigkeit oder auch Klanghaftigkeit genannt, eines Geräusches vor, wenn innerhalb dieses Geräusches Einzeltöne zu hören sind. Durch die Abbildung der Schwingungskomponenten, die für wenigstens eine Tonhaltigkeit maßgeblich sind, in den virtuellen Freiheitsgraden können entsprechende Stellsignale ermittelt werden, so dass die Tonhaltigkeiten gezielt bedämpft werden können.

Vorzugsweise wird jeder zu dämpfende virtuelle Freiheitsgrad durch wenigstens eine Schwingungsdämpferanordnung gedämpft. Die Freiheitsgrade der Triebstranganordnung können also beispielsweise durch sechs Schwingungsdämpferanordnungen gedämpft werden. Sollen weniger Freiheitsgrade gedämpft werden, so werden die entsprechenden Freiheitsgrade jeweils durch wenigstens eine Schwingungsdämpferanordnung bedämpft. Das erlaubt eine gute Dämpfung der Triebstranganordnung.

Vorzugsweise wird bei mindestens einem Freiheitsgrad eine primäre Anregungsfrequenz und wenigstens eine sekundäre Anregungsfrequenz durch die Schwingungsdämpferanordnung gleichzeitig gedämpft. Durch die verschiedenen Übersetzungsverhältnisse innerhalb einer Triebstranganordnung werden beispielsweise eine primäre Anregungsfrequenz und eine sekundäre Anregungsfrequenz verursacht oder durch eine weitere Harmonische einer Anregungsfrequenz verursacht. Die Harmonische bezeichnet weitere Anregungsfrequenzen, die in Harmonien zu der primären oder sekundären Anregungsfrequenz liegen. Durch die gleichzeitige Dämpfung der beiden Anregungsfrequenzen in Bezug auf einen Freiheitsgrad wird eine effiziente Dämpfung der Triebstranganordnung erreicht.

Vorzugsweise verwendet die Verarbeitungseinheit Methoden der künstlichen Intelligenz oder des maschinellen Lernens zur Ermittlung des wenigstens einen Stellsignals. Die Methoden der künstlichen Intelligenz umfassen zum Beispiel auch mit dem Bereich des maschinellen Lernens. Dies erlaubt beispielsweise eine Betrachtung der Schwingungen der Triebstranganordnung über einen langen Zeitraum, so dass mögliche Verschleißerscheinungen, die Schwingungen verursachen können, auch mit in die Ermittlung der Stellsignale einfließen können. Weiterhin können Betriebseinflüsse wie Temperatur, Drehmomenten- oder Leistungsabhängigkeit oder weitere Umgebungseinflüsse in die Ermittlung der Stellsignale einfließen. Entsprechend wird ein manuelles Nachstellen der Schwingungsdämpfung vermieden, was in einem niedrigen Personalaufwand, einer guten Dämpfungswirkung und einer guten Effizienz resultiert.

Weiterhin wird die oben genannte Aufgabe durch die Merkmale des Anspruchs 9 gelöst. Die Vorrichtung ist dazu ausgelegt, ein Verfahren nach einem der Ansprüche 1 bis 8 durchzuführen. Durch die Vorrichtung in Verbindung mit dem oben beschriebenen Verfahren wird eine gute Dämpfung der Triebstranganordnung erreicht.

Vorzugsweise sind die wenigstens eine Schwingungsaufnahmeanordnung und die wenigstens eine Schwingungsdämpfungsanordnung an einem Getriebegehäuse, einem Lagerpunkt des Triebstrangs und/oder einem Maschinenträger angeordnet. Der Triebstrang bezeichnet eine Einheit aus Rotor, Eingangswelle, Getriebe, Ausgangswelle und Generator. Unter einem Lagerpunkt des Triebstrangs versteht man in der vorliegenden Beschreibung beispielsweise eine elastische Drehmomentstütze oder starre Verbindung die den Triebstrang mit dem Maschinenträger verbinden. Der Maschinenträger beschreibt eine Anordnung, die dazu ausgelegt ist, die Triebstranganordnung zu halten. Entsprechend ist die Positionierung der Schwingungsaufnahmeanordnung und der Schwingungsdämpfungsanordnung frei wählbar. Dies führt zu einer guten Flexibilität der Anordnung.

Vorzugsweise ist die Schwingungsaufnahmeanordnung in einem schwingungsbelasteten Bereich angeordnet. Dies erlaubt eine gute Aufnahme von Messsignalen durch die Schwingungsaufnahmeanordnung, so dass basierend auf den guten Messsignalen gute Stellsignale ermittelt werden können, so dass die Triebstranganordnung gut gedämpft werden kann.

Vorzugsweise bilden jeweils eine Schwingungsaufnahmeanordnung und jeweils eine Schwingungsdämpferanordnung eine Einheit. Dies erlaubt eine einfache Anordnung der Einheit an entsprechenden Bereichen der Triebstranganordnung. Weiterhin wird durch die eine Einheit aus der Schwingungsaufnahmeanordnung und der Schwingungsdämpferanordnung eine einfache Montage erreicht.

Vorzugsweise stehen die wenigstens eine Schwingungsaufnahmeanordnung und die wenigstens eine Schwingungsdämpferanordnung mit der Verarbeitungseinheit in Datenverbindung. Dadurch wird ein einfacher Austausch der Messsignale und der Stellsignale zwischen der Verarbeitungseinheit und der Schwingungsaufnahmeanordnung bzw. der Schwingungsdämpferanordnung ermöglicht.

Vorzugsweise weist die Verarbeitungseinheit wenigstens einen Bandpassfilter auf. Durch den Bandpassfilter können einzelne Frequenzbereiche gezielt aus den Messsignalen herausgefiltert werden, so dass aus diesen Frequenzbereiche virtuelle Freiheitsgrade ermittelt werden können. Folglich liegt eine einfache Berechnung bzw. Ermittlung der virtuellen Freiheitsgrade vor, was zu einer guten Effizienz führt.

Vorzugsweise ist die Verarbeitungseinheit mit wenigstens einem Drehzahlsensor der Triebstranganordnung verbunden. Der Begriff "verbunden" bezeichnet hierbei eine Datenverbindung, so dass Drehzahlsignale von dem Drehzahlsensor an die Verarbeitungseinheit übertragen werden können. Folglich kann die Verarbeitungseinheit die Drehzahlsignale mit in die Berechnung und Ermittlung des Stellsignals mit einbeziehen. Das erlaubt eine drehzahlabhängige Ermittlung des Stellsignals.

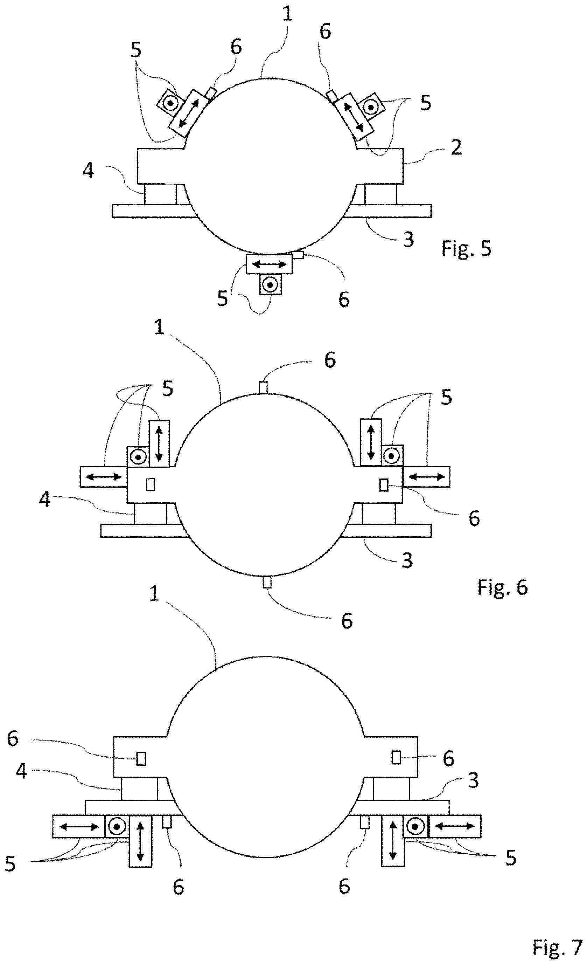

Weiterhin sind durch die Schwingungsdämpfungsanordnung wie skizziert in Fig. 5 die sechs Starrkörperbewegungen oder die elastischen Schwingformen zumindest eines Bauteils der Triebstranganordnung dämpfbar. Die Starrkörperbewegungen sind: Rollen (Drehung um x-Achse, Nicken (Drehung um y-Achse), Gieren (Drehung um z-Achse), x-translatorische Bewegung, y-translatorische Bewegung und z-translatorische Bewegung. Durch die Schwingungsdämpfungsanordnung können alle Schwingungen bis zur vollständigen Schwingungsreduktion gedämpft bzw. reduziert werden.

Die Erfindung wird im Folgenden anhand eines bevorzugten Ausführungsbeispiels in Verbindung mit einer Zeichnung beschrieben. Hierin zeigen:
- Fig. 1: eine schematische Darstellung eines erfindungsgemäßen Verfahrens;
- Fig. 2: eine schematische Darstellung einer Ermittlung von Stellsignalen basierend auf verarbeiteten Messsignalen.
- Fig. 3: eine schematische Darstellung einer ersten Ausführungsform einer Triebstranganordnung;
- Fig. 4: eine schematische Darstellung einer zweiten Ausführungsform einer Triebstranganordnung;
- Fig. 5: eine schematische Darstellung einer dritten Ausführungsform einer Triebstranganordnung;
- Fig. 6: eine schematische Darstellung einer vierten Ausführungsform einer Triebstranganordnung;
- Fig. 7: eine schematische Darstellung einer fünften Ausführungsform einer Triebstranganordnung;
- Fig. 8: eine schematische Darstellung einer sechsten Ausführungsform einer Triebstranganordnung;
- Fig. 9: eine schematische Darstellung einer siebten Ausführungsform einer Triebstranganordnung;

Im Folgenden werden gleiche Elemente mit den gleichen Bezugszeichen versehen.

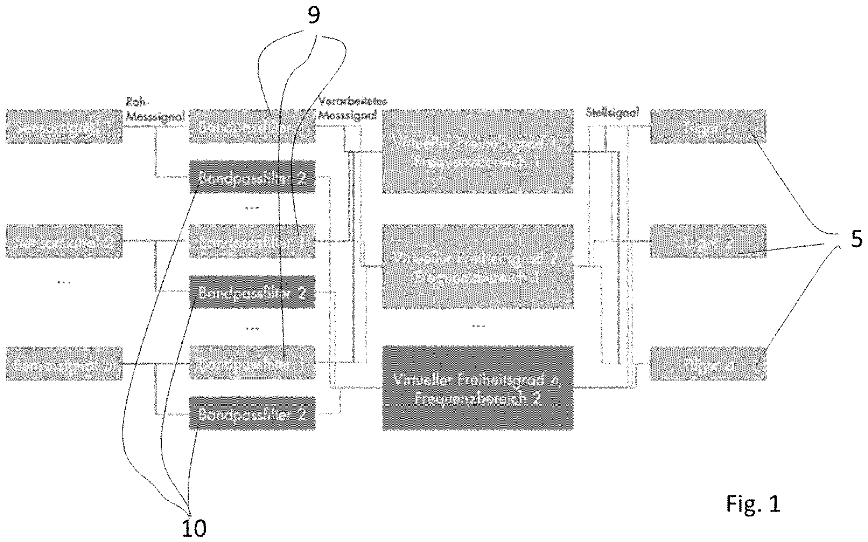

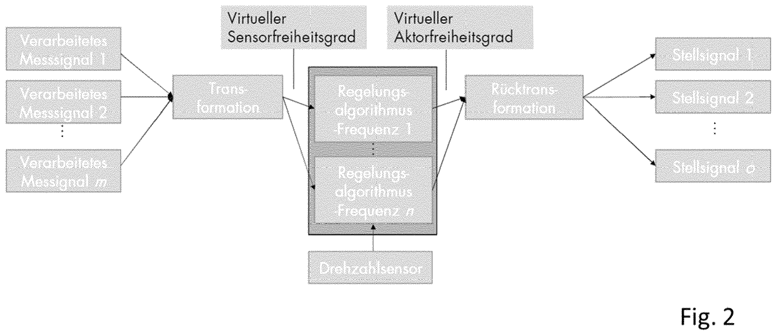

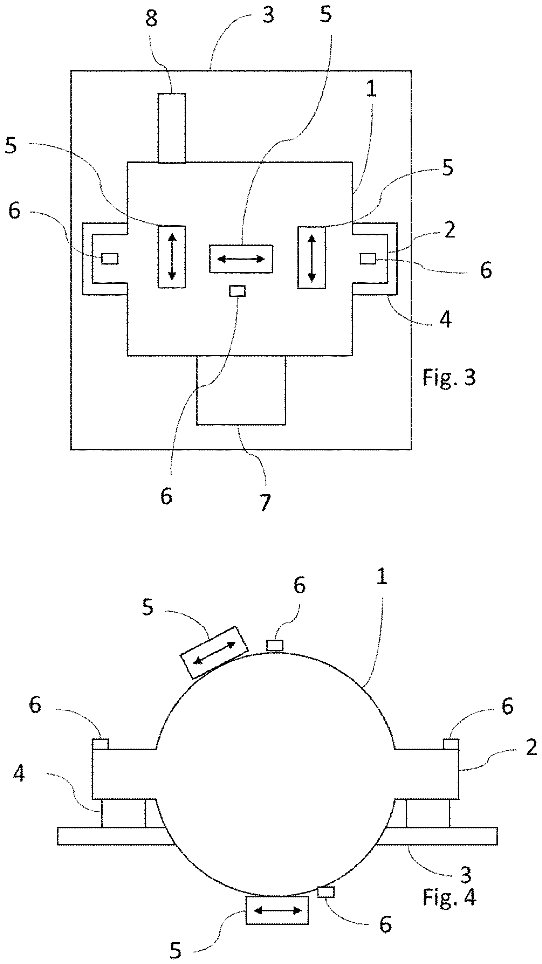

Fig. 1 und 2 zeigen ein schematisches Schaubild des Verfahrens zur Ermittlung eines Stellsignals basierend auf Messsignalen durch die wenigstens eine Schwingungsaufnahmeanordnung 6 (nur in den Fig. 3 bis 9 dargestellt).

Fig. 1 zeigt ausgehend von einem Messsignal, das durch die wenigstens eine Schwingungsaufnahmeanordnung 6 ( Fig. 3 bis 9) ermittelt wurde, ein erfindungsgemäßes Verfahren zur Erstellung eines Stellsignals, das an Schwingungsdämpferanordnungen 5 übermittelt wird. Dazu wird das Messsignal, auch Roh-Messsignal genannt, durch zwei Bandpassfilter 9, 10 gefiltert und einem jeweiligen Frequenzbereich zugewiesen. Das Signal, das aus den Bandpassfiltern 9, 10 hervorgeht, wird auch verarbeitetes Messsignal genannt. Ausgehend von dem verarbeiteten Messsignal wird jedes verarbeitete Messsignal einem virtuellen Freiheitsgrad innerhalb eines Frequenzbereiches zugewiesen. So werden beispielsweise die verarbeiteten Messsignale des ersten Bandpassfilters 9 dem ersten Frequenzbereich zugeordnet, während die verarbeiteten Messsignale des zweiten Bandpassfilters 10 dem zweiten Frequenzbereich zugeordnet werden. Innerhalb des ersten oder zweiten Frequenzbereichs werden die verarbeiteten Messsignale in virtuelle Freiheitsgrade überführt. Ausgehend von den virtuellen Freiheitsgraden des jeweiligen Frequenzbereiches werden Stellsignale für eine jeweilige Schwingungsdämpferanordnung 5 ermittelt. Basierend auf diesen Stellsignalen dämpft die jeweilige Schwingungsdämpferanordnung 5 Schwingungen der Triebstranganordnung. Den Übergang vom verarbeiteten Messsignal hin zu einem virtuellen Freiheitsgrad wird dabei auch Transformation genannt. Der Übergang vom virtuellen Freiheitsgrad zu einem Stellsignal wird Rücktransformation genannt.

In Fig. 2 wird das Verfahren ausgehend von dem verarbeiteten Messsignal hin zu einem Stellsignal erläutert. Das verarbeitete Messsignal wird durch eine Transformation zu einem virtuellen Sensorfreiheitsgrad überführt. Der virtuelle Sensorfreiheitsgrad wird durch Regelungsalgorithmen, die beispielsweise auch Informationen eines Drehzahlsensors 11 mit einbeziehen, verarbeitet, so dass ein Ergebnis des Regelungsalgorithmus ein virtueller Aktorfreiheitsgrad ist. Der virtuelle Aktorfreiheitsgrad wird zurücktransformiert, um somit ein Stellsignal zu erhalten. Im Rahmen des Regelungsalgorithmus können beispielsweise auch Methoden der künstlichen Intelligenz verwendet werden.

Virtuelle Freiheitsgrade sind in einer virtuell bzw. digitalen Umgebung dargestellte Bewegungen bzw. Schwingungen der Triebstranganordnung. Dabei können die virtuellen Freiheitsgrade losgelöst von den tatsächlichen realen Freiheitsgraden der Triebstranganordnung betrachtet und verarbeitet werden. Weiterhin können Messsignale unterschiedlicher Schwingungsaufnahmeanordnungen entsprechenden Freiheitsgraden zugeordnet werden.

Die Messsignale können beispielsweise in einem ersten Koordinatensystem, wie beispielsweise einem kathartischen Koordinatensystem übermittelt werden. Die virtuellen Freiheitsgrade hingegen können beispielsweise in einem zweiten Koordinatensystem dargestellt werden. Das zweite Koordinatensystem kann beispielsweise ein polares Koordinatensystem sein.

Die virtuellen Freiheitsgrade sollen Schwingungskomponenten des Triebstrangs bzw. der Triebstranganordnung abbilden, wobei die Schwingungskomponenten maßgeblich für die Tonhaltigkeit sein sollten. Dadurch können Schwingungen der Triebstranganordnung effektiv bekämpft werden.

Um die maßgeblichen Schwingungskomponenten abzubilden, sind die Schwingungsaufnahmeanordnungen 6 beispielsweise in entsprechenden schwingungsbelasteten Bereichen der Triebstranganordnung angeordnet.

Jeweils eine Schwingungsdämpferanordnung 5 und eine Schwingungsaufnahmeanordnung 6 können als eine Einheit ausgebildet werden, die an einer entsprechenden Stelle der Triebstranganordnung angebracht wird.

Das Verfahren zur Ermittlung des Stellsignals kann weiterhin Methoden der künstlichen Intelligenz verwenden. Das erlaubt eine genaue Auswertung der Eingangswerte (Messwerte) und ermöglicht somit eine gute Dämpfung der Triebstranganordnung.

Fig. 3 zeigt eine Triebstranganordnung einer Windkraftanlage bzw. Windenergieanlage mit einem Getriebe/Triebstranggehäuse 1, einer Drehmomentstütze 2, einem Maschinenträger 3, zwei Lagerpunkten 4, drei Schwingungsdämpferanordnungen 5, zwei Schwingungsaufnahmeanordnungen 6, sowie einer langsamen Welle 7 und einer schnellen Welle 8. Die schnelle Welle ist dabei generatorseitig angeordnet, und die langsam drehende Welle 7 ist beispielsweise an einem nicht dargestellten Rotor der Windenergieanlage angeordnet. Die Schwingungsaufnahmeanordnungen 6 sind dabei an den Drehmomentstützen 2 der Triebstranganordnung angeordnet. Die Schwingungsdämpferanordnung 5 ist an dem Getriebe/Triebstranggehäuse 1 angeordnet.

In Fig. 4 ist ein zweites Ausführungsbeispiel der Triebstranganordnung dargestellt. Das Getriebe/Triebstranggehäuse 1 ist durch zwei Drehmomentstützen 2, und zwei Lagerpunkten 4 mit dem Maschinenträger 3 verbunden. An jeder Drehmomentstütze 2 ist eine Schwingungsaufnahmeanordnung 6 vorgesehen. Auf dem Getriebe/Triebstranggehäuse 1 sind zwei Schwingungsdämpferanordnungen 5 und zwei Schwingungsaufnahmeanordnungen 6 vorgesehen.

In Fig. 5 ist eine dritte Ausführungsform der Triebstranganordnung dargestellt. Dabei sind drei Einheiten mit jeweils einer Schwingungsaufnahmeanordnung 6 und Schwingungsdämpferanordnung 5 an dem Getriebe/Triebstranggehäuse 1 angeordnet. Der Triebstrang ist über zwei Drehmomentstützen 2 über zwei Lagerpunkte 4 mit dem Maschinenträger 3 verbunden.

Fig. 6 zeigt eine vierte Ausführungsform der Triebstranganordnung. Dabei sind die Schwingungsdämpferanordnungen 5 jeweils der Drehmomentstütze 2 des Getriebes/Triebstranggehäuses 1 angeordnet. Zwei Schwingungsaufnahmeanordnungen 6 sind am Getriebe/Triebstranggehäuse 1 angeordnet. Ebenfalls ist eine Schwingungsaufnahmeanordnung 6 im Bereich der Drehmomentstütze 2, des Lagerpunkts, angeordnet.

In Fig. 7 ist ein fünftes Ausführungsbeispiel der Triebstranganordnung dargestellt. Dabei sind Schwingungsdämpferanordnungen 5 an einem Maschinenträger 3 angeordnet, der über Lagerpunkte 4 mit dem Getriebe/Triebstranggehäuses 1 verbunden ist. Die Lagerpunkte 4 sind dabei mit Drehmomentstützen 2 des Getriebes/Triebstranggehäuses 1 verbunden. An den beiden dargestellten Drehmomentstützen 2 ist jeweils eine Schwingungsaufnahmeanordnung 6 vorgesehen.

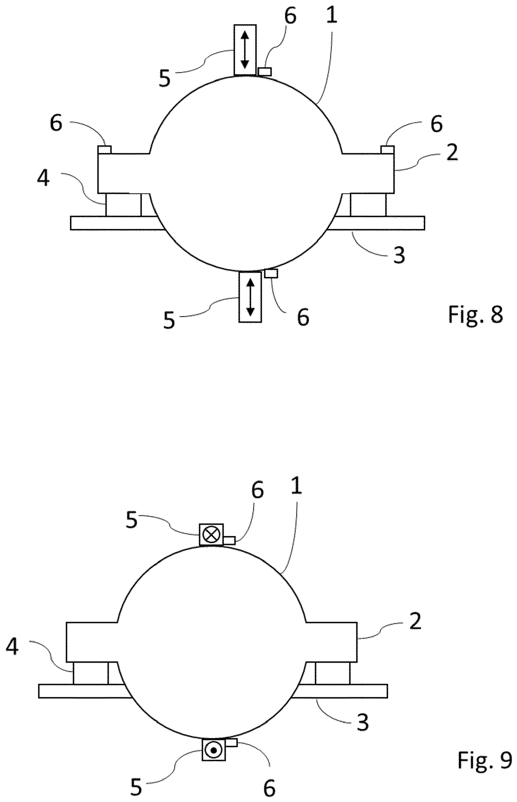

Fig. 8 zeigt ein sechstes Ausführungsbeispiel der Triebstranganordnung. Dabei sind Schwingungsdämpferanordnungen 5 an dem Getriebe/Triebstranggehäuse 1 vorgesehen. Schwingungsaufnahmeanordnungen 6 sind jeweils eine an den beiden dargestellten Drehmomentstützen 2 der Triebstranganordnung vorgesehen. Weiterhin sind zwei Schwingungsdämpferanordnungen 6 am Triebstranggehäuse 1 vorgesehen.

Fig. 9 zeigt ein siebtes Ausführungsbeispiel der Triebstranganordnung, bei der jeweils eine Schwingungsdämpferanordnung 5 und eine Schwingungsaufnahmeanordnung 6 als ein Element ausgeführt sind, die an dem Getriebe/Triebstranggehäuses 1 angeordnet sind.

In den dargestellten Fig. 3 bis 9 sind die jeweiligen Schwingungsaufnahmeanordnungen 6 und Schwingungsdämpferanordnungen 5 mit einer nicht dargestellten Verarbeitungseinheit verbunden. Die Verarbeitungseinheit kann weiterhin mit wenigstens einem nicht dargestellten Drehzahlsensor der Triebstranganordnung verbunden sein, so dass Drehzahlsignale der Verarbeitungseinheit mitgeteilt werden können. Basierend auf den eingegangenen Messwerten der Schwingungsaufnahmeanordnungen und des wenigstens einen Drehzahlsensors ermittelt die nicht dargestellte Verarbeitungseinheit wenigstens ein Stellsignal, das an wenigstens eine Schwingungsdämpferanordnung 5 übermittelt wird. Basierend auf diesem Stellsignal dämpft die Schwingungsdämpferanordnung 5 Schwingungen der Triebstranganordnung. Die Schwingungsdämpferanordnung 5 ist eine aktive Schwingungsdämpferanordnung 5, auch Tilger oder Aktor genannt. Die Schwingungsaufnahmeanordnung 6 wird ebenfalls als Sensor oder dergleichen bezeichnet.

### Bezugszeichenliste

- 1: Getriebe/Triebstranggehäuse
- 2: Drehmomentstütze (Lagerpunkt)
- 3: Maschinenträger
- 4: Lagerpunkt
- 5: Schwingungsdämpferanordnung
- 6: Schwingungsaufnahmeanordnung
- 7: langsame Welle
- 8: schnelle Welle
- 9: erster Bandpassfilter
- 10: zweiter Bandpassfilter

## Patentansprüche

1. Verfahren zur Schwingungsdämpfung einer Triebstranganordnung mit wenigstens einer aktiven Schwingungsdämpferanordnung (5) und wenigstens einer Schwingungsaufnahmeanordnung (6), umfassend folgende Schritte:
a. Bereitstellen von Messsignalen durch die wenigstens eine Schwingungsaufnahmeanordnung (6) an eine Verarbeitungseinheit; dadurch gekenzeichnet, dass das Verfahren weiterhin folgende Schritte beinhaltet:
b. Überführen der Messsignale in virtuelle Freiheitsgrade, wobei die virtuellen Freiheitsgrade in einer virtuellen Umgebung dargestellte Schwingungen der Triebstranganordnung sind und Schwingungskomponenten des Triebstrangs abbilden, die für wenigstens eine Tonhaltigkeit maßgeblich sind;
c. Ermitteln wenigstens eines Stellsignals basierend auf den virtuellen Freiheitsgraden;
d. Ausgabe des wenigstens einen Stellsignals an die wenigstens eine Schwingungsdämpferanordnung (5);
e. Dämpfung der Triebstranganordnung durch die Schwingungsdämpferanordnung (6) basierend auf dem wenigstens einen Stellsignal.

2. Verfahren nach Anspruch 1, **dadurch gekennzeichnet, dass** der Schritt b wenigstens einen Bandpassfilter (9, 10) verwendet.

3. Verfahren nach Anspruch 1 oder 2, **dadurch gekennzeichnet, dass** in Schritt c Drehzahlmesssignale wenigstens eines Drehzahlsensors der Triebstranganordnung einbezogen werden.

4. Verfahren nach einem der Ansprüche 1 bis 3, **dadurch gekennzeichnet, dass** die Messsignale in wenigstens einem ersten Koordinatensystem bereitgestellt werden, und dass die virtuellen Freiheitsgrade in wenigstens einem zweiten Koordinatensystem dargestellt werden.

5. Verfahren nach einem der Ansprüche 1 bis 4, **dadurch gekennzeichnet, dass** jeder zu dämpfende virtuelle Freiheitsgrad durch wenigstens eine Schwingungsdämpferanordnung (5) gedämpft wird.

6. Verfahren nach einem der Ansprüche 1 bis 5, **dadurch gekennzeichnet, dass** bei mindestens einem Freiheitsgrad eine primäre Anregungsfrequenz und wenigstens eine sekundäre Anregungsfrequenz durch die Schwingungsdämpferanordnung (5) gleichzeitig gedämpft wird.

7. Verfahren nach einem der Ansprüche 1 bis 6, **dadurch gekennzeichnet, dass** die Verarbeitungseinheit Methoden der Künstlichen Intelligenz oder des maschinellen Lernens zur Ermittlung des wenigstens einen Stellsignals verwendet.

8. Verfahren nach einem der Ansprüche 1 bis 7, **dadurch gekennzeichnet, dass** bis zu sechs verschiedene virtuelle Freiheitsgrade vorliegen, nämlich Rollen um eine Hauptachse des Triebstranges, Nicken um eine Querrichtung, Gieren um eine Hochachse, eine x-translatorische Bewegung, eine y-translatorische Bewegung und eine z-translatorische Bewegung.

9. Vorrichtung zur Schwingungsdämpfung von Triebstranganordnungen mit wenigstens einer aktiven Schwingungsdämpfungsanordnung (5), wenigstens einer Schwingungsaufnahmeanordnung (6) und einer Verarbeitungseinheit, **dadurch gekennzeichnet, dass** die Vorrichtung dazu ausgelegt ist, ein Verfahren nach einem der Ansprüche 1 bis 8 durchzuführen.

10. Vorrichtung nach Anspruch 9, **dadurch gekennzeichnet, dass** die wenigstens eine Schwingungsaufnahmeanordnung (6) und die wenigstens eine Schwingungsdämpfungsanordnung (5) an einem Triebstrang (1), einem Lagerpunkt (2) des Triebstrangs (1) und/oder einem Maschinenträger (3) angeordnet sind.

11. Vorrichtung nach Anspruch 9 oder 10, **dadurch gekennzeichnet, dass** die Schwingungsaufnahmeanordnung (6) in einem mit schwingungsbelastetem Bereich angeordnet ist.

12. Vorrichtung nach einem der Ansprüche 9 bis 11, **dadurch gekennzeichnet, dass** jeweils eine Schwingungsaufnahmeanordnung (6) und jeweils eine Schwingungsdämpferanordnung (5) eine Einheit bilden.

13. Vorrichtung nach einem der Ansprüche 9 bis 12, **dadurch gekennzeichnet, dass** die wenigstens eine Schwingungsaufnahmeanordnung (6) und die wenigstens eine Schwingungsdämpfungsanordnung (5) mit der Verarbeitungseinheit in Datenverbindung stehen.

14. Vorrichtung nach einem der Ansprüche 9 bis 13, **dadurch gekennzeichnet, dass** die Verarbeitungseinheit wenigstens einen Bandpassfilter (9, 10) aufweist.

15. Vorrichtung nach einem der Ansprüche 9 bis 14, **dadurch gekennzeichnet, dass** die Verarbeitungseinheit mit wenigstens einem Drehzahlsensor der Triebstranganordnung verbunden ist.

## Claims

1. Method for vibration damping of a drive train arrangement with at least one active vibration damper arrangement (5) and at least one vibration recording arrangement (6), comprising the following steps:
a. provision of measurement signals by the at least one vibration recording arrangement (6) to a processing unit; **characterized in that** the method further comprises the following steps:
b. converting the measurement signals into virtual degrees of freedom, wherein the virtual degrees of freedom are in a virtual environment represented vibrations of the drive train arrangement and represent vibration components of the drive train which are decisive for at least one tonality;
c. determining at least one control signal based on the virtual degrees of freedom;
d. outputting the at least one control signal to the at least one vibration damper arrangement (5);
e. damping of the drive train arrangement by the vibration damper arrangement (5) based on the at least one control signal.

2. Method according to claim 1, **characterized in that** step b uses at least one bandpass filter (9, 10).

3. Method according to claim 1 or 2, **characterized in that** in step c rotational speed measurement signals of at least one rotational speed sensor of the drive train arrangement are included.

4. Method according to any of claims 1 to 3, **characterized in that** the measurement signals are provided in at least a first coordinate system, and **in that** the virtual degrees of freedom are represented in at least a second coordinate system.

5. Method according to any of claims 1 to 4, **characterized in that** each to be damped virtual degree of freedom is damped by at least one vibration damper arrangement (5).

6. Method according to any of claims 1 to 5, **characterized in that** for at least one degree of freedom, a primary excitation frequency and at least one secondary excitation frequency are simultaneously damped by the vibration damper arrangement (5).

7. Method according to any of claims 1 to 6, **characterized in that** the processing unit uses methods of artificial intelligence or machine learning to determine the at least one control signal.

8. Method according to any one of claims 1 to 7, **characterized in that** there are up to six different virtual degrees of freedom, namely rolling about a main axis of the drive train, pitching about a transverse direction, yawing about a vertical axis, an x-translatory movement, a y-translatory movement and a z-translatory movement.

9. Device for vibration damping of drive train arrangements having at least one active vibration damping arrangement (5), at least one vibration recording arrangement (6) and a processing unit, **characterized in that** the device is configured to carry out a method according to any of claims 1 to 8.

10. Device according to claim 9, **characterized in that** the at least one vibration recording arrangement (6) and the at least one vibration damping arrangement (5) are arranged at a drive train (1), a bearing point (2) of the drive train (1) and/or a machine carrier (3).

11. Device according to claim 9 or 10, **characterized in that** the vibration recording arrangement (6) is arranged in an area subject to vibration.

12. Device according to any one of claims 9 to 11, **characterized in that** each a vibration recording arrangement (6) and each a vibration damper arrangement (5) form a unit.

13. Device according to any one of claims 9 to 12, **characterized in that** the at least one vibration recording arrangement (6) and the at least one vibration damping arrangement (5) are in data connection with the processing unit.

14. Device according to any of claims 9 to 13, **characterized in that** the processing unit comprises at least one bandpass filter (9, 10).

15. Device according to any of claims 9 to 14, **characterized in that** the processing unit is connected to at least one rotational speed sensor of the drive train arrangement.

## Revendications

1. Procédé d'amortissement de vibrations d'un ensemble de chaîne cinématique avec au moins un système amortisseur de vibrations actif (5) et au moins un ensemble de réception de vibrations (6), comprenant les étapes suivantes :
a. préparation de signaux de mesure par au moins un ensemble de réception de vibrations (6) sur une unité de traitement,
b. transfert des signaux de mesure en degrés de liberté virtuels, sachant que les degrés de liberté virtuels sont les vibrations de l'ensemble de chaîne cinématique représentées dans un environnement virtuel et reproduisent des composantes de vibration de la chaîne cinématique, qui sont valables pour au moins une tonalité,
c. détermination d'au moins un signal de réglage en se basant sur les degrés de liberté virtuels,
d. émission d'au moins un signal de réglage à au moins un ensemble amortisseur de vibrations (5),
e. amortissement de l'ensemble de chaîne cinématique par le système amortisseur de vibrations (5) en se basant sur au moins un signal de réglage.

2. Procédé selon la revendication 1, **caractérisé en ce que** l'étape b utilise au moins un filtre passe-bande (9, 10).

3. Procédé selon la revendication 1 ou 2, **caractérisé en ce que** des signaux de mesure de vitesse de rotation d'au moins un capteur de vitesse de rotation de l'ensemble de chaîne cinématique sont inclus dans l'étape c.

4. Procédé selon l'une quelconque des revendications 1 à 3, **caractérisé en ce que** les signaux de mesure sont préparés dans au moins un premier système de coordonnées et **en ce que** les degrés de liberté virtuels sont représentés dans au moins un deuxième système de coordonnées.

5. Procédé selon l'une quelconque des revendications 1 à 4, **caractérisé en ce que** chaque degré de liberté virtuelle à amortir est amorti par au moins un système amortisseur de vibrations (5).

6. Procédé selon l'une quelconque des revendications 1 à 5, **caractérisé en ce qu'**une fréquence d'excitation primaire pour au moins un degré de liberté et au moins une fréquence d'excitation secondaire sont simultanément amorties par le système amortisseur de vibrations (5).

7. Procédé selon l'une quelconque des revendications 1 à 6, **caractérisé en ce que** l'unité de traitement utilise des méthodes de l'Intelligence Artificielle ou de l'apprentissage machine pour déterminer au moins un signal de réglage.

8. Procédé selon l'une quelconque des revendications 1 à 7, **caractérisé en ce qu'**il existe jusqu'à six degrés de liberté virtuels différents, notamment le roulement autour d'un axe principal de la chaîne cinématique, le tangage autour d'une direction transversale, le mouvement de lacet autour d'un axe vertical, un mouvement translatoire x, un mouvement translatoire y et un mouvement translatoire z.

9. Dispositif d'amortissement de vibrations d'ensemble de chaîne cinématique avec au moins un système amortisseur de vibrations actif (5), au moins un ensemble de réception de vibrations (6) et une unité de traitement, **caractérisé en ce que** le dispositif est conçu pour exécuter un procédé selon l'une quelconque des revendications 1 à 8.

10. Dispositif selon la revendication 9, **caractérisé en ce qu'**au moins un ensemble de réception de vibrations (6) et au moins un système amortisseur de vibrations (5) sont disposés sur une chaîne cinématique (1), un point de support (2) de la chaîne cinématique (1) et/ou un support de machine (3).

11. Dispositif selon la revendication 9 ou 10, **caractérisé en ce que** le système de réception de vibrations (6) est disposé dans une zone sollicitée par des vibrations.

12. Dispositif selon l'une quelconque des revendications 9 à 11, **caractérisé en ce que** respectivement un système de réception de vibrations (6) et respectivement un système amortisseur de vibrations (5) forment une unité.

13. Dispositif selon l'une quelconque des revendications 9 à 12, **caractérisé en ce qu'**au moins un système de réception de vibrations (6) et au moins un système amortisseur de vibrations (5) se trouvent en liaison de données avec l'unité de traitement.

14. Dispositif selon l'une quelconque des revendications 9 à 13, **caractérisé en ce que** l'unité de traitement comporte au moins un filtre passe-bande (9, 10).

15. Dispositif selon l'une quelconque des revendications 9 à 14, **caractérisée en ce que** l'unité de traitement est reliée à au moins un capteur de vitesse de rotation de l'ensemble de chaîne cinématique.
